# EUROPEAN PATENT SPECIFICATION

(11) **EP 4 495 654 B1**
(45) Date of publication and mention of the grant of the patent: **10.06.2026**
(21) Application number: 23193405.0
(22) Date of filing: 25.08.2023
(51) Int. Cl.: G03B 17/08, G03B 30/00, G02B 7/02

(54) **ONE-PIECE LENS BARREL HAVING HIGH SEALING PERFORMANCE**
EINTEILIGES OBJEKTIVGEHÄUSE MIT HOHER DICHTUNGSLEISTUNG
BARILLET D'OBJECTIF MONOBLOC À HAUTE PERFORMANCE D'ÉTANCHÉITÉ

(30) Priority: 19.07.2023 CN 202321896469 U; 21.07.2023 CN 202321990409 U
(43) Date of publication of application: 22.01.2025
(73) Proprietor: Shenzhen Xin Mao Xin Industrial Co., Ltd, Shenzhen, Guangdong 518000 (CN)
(72) Inventor: LIU, Qiuhua, Shenzhen (CN); LIU, Xinhua, Shenzhen (CN)
(74) Representative: Zaboliene, Reda

(56) References cited:
- CN-A- 115 604 552
- US-A1- 2009 128 684
- US-A1- 2021 318 507

## Description

### CROSS REFERENCE TO RELATED APPLICATIONS

The present application claims priority of the Chinese patent application No. 2023218964699, filed on 19-Jul-23, and the Chinese patent application No. 2023219904093, filed on 27-Jul-23.

### TECHNICAL FIELD

The present disclosure relates to the field of front shell assembling, and in particular to a one-piece lens barrel having high sealing performance.

### BACKGROUND

A lens barrel, also known as a vehicle-mounted lens barrel, is a metal or plastic cylinder specifically configured for optical group lenses of a circumference fixed lens component. A length of the lens barrel may be varied as a focal length of the lens component varies. A diameter of the lens barrel is adapted with an aperture of the lens. A front end of a front shell is arranged with a screw for arranging a light shielding cover. A rear end of the lens barrel has a screw (a notch) to allow a camera to be arranged therein. For different lenses and cameras, the front shell is arranged with different components, such as a focus ring, an aperture adjustment shank (or a grating ring), a shutter vanadium, a zoom ring, and so on. In addition, the front shell may be engraved with a largest relative aperture of the lens, a focal length, or depth of day and so on.

While the front shell is being assembled, the applicant found that the above technology at least has the following technical problems:
1. While assembling a traditional front shell assembly, a dispensing process, a curing process, a screwing process, and so on, may be performed. The entire assembling process may be time consumed, complexed, have a low assembling efficiency, and have a high assembly cost.
2. A motherboard of the traditional front shell may be generally fixedly arranged, by screws and glue, inside the traditional front shell. However, when the screws and the glue are present in an environment of high temperatures and high humidity and are being vibrating for a long period of time, the screws and the glue may be melted and loose easily, resulting in the motherboard of the front shell to be shifted.
3. Various internal components of the traditional front shell are sealed with each other by seal rings. Further, the glue is applied for adhesion, and the screws are arranged for fixation. As the traditional front shell is being used for a long period of time, the seal ring and the glue may be aged, such that sealing performance may be affected, resulting in fog and dust being accumulated on the lens.

In order to solve the above problems, a one-piece lens barrel having high sealing performance is provided to solve the above problems.

The US patent application No. US2021/318507A1 discloses a vehicle camera module including a lens, circuit board having an image sensor, front housing, and rear housing. The lens has a lens barrel and lens elements assembled. The front housing has front and rear sides to which the lens and the circuit board are assembled, respectively. The rear housing is coupled rearwardly of the front housing to seal the lens and circuit board. The front housing includes posts protruding rearward and a pin protruding distally of the post and having a smaller cross-sectional area than the post. The circuit board includes a plated through-hole configured to at least partially receive the pin. The front housing and circuit board are pre-assembled such that pin and plated through-hole have an assembly clearance, the io lens and image sensor are optically aligned in a pre-assembled state, and the assembly clearance is fixedly soldered through a laser solder-jet bonding process.

The US patent application No. US2009/128684A1 discloses a method for manufacturing a camera module is provided, the camera module including a lens and an image sensor chip, the image sensor chip being electrically contacted to a circuit board. After a first fitting part that surrounds the image sensor chip is positioned and secured on the circuit board, the first fitting part is joined to a second fitting part disposed on the housing of the camera module, forming an overlap region. A focus position between the housing-side lens and the image sensor chip is produced, and a materially attached connection is then generated between the fitting parts within the overlap region, in the focus position.

The CN patent application No. CN115604552A discloses a camera module and a manufacturing method of the camera module. The camera module comprises a shell, a lens, a printed circuit board and an internal locking piece, the shell is provided with a lens mounting hole; the imaging end of the lens cone is inserted into the lens mounting hole; the imaging end of the lens barrel is connected with the printed circuit board to form a pre-assembly part, and the printed circuit board is configured to pass through the lens mounting hole along with the imaging end of the lens barrel; the internal locking piece is connected with the imaging end of the lens barrel, and the lens is fixed in the lens mounting hole of the shell through the internal locking piece. The manufacturing method of the camera module comprises the following steps: S10, connecting a printed circuit board to an imaging end of a lens cone to form a pre-assembled part; s20, enabling the imaging end of the lens cone of the pre-assembly part and the printed circuit board to pass through a lens mounting hole of the shell; and S30, fixedly connecting the lens cone with the shell by using a locking piece. Due to the fact that the lens and the printed circuit board are aligned and fixed in advance, high assembly precision and high assembly efficiency can be achieved, and the joint position of the shell is designed according to needs.

### SUMMARY OF THE DISCLOSURE

The present disclosure provides a one-piece lens barrel having high sealing performance to solve the above problems.

In order to achieve the above objective, a one-piece lens barrel having high sealing performance is provided as set out in the amended set of claims.

According to the present disclosure, following technical effects can be achieved.
1. In the present disclosure, the front shell and the bottom shell are configured into a one-piece structure by performing a forging process. Further, the front shell and the bottom shell are soldered and sealed with each other by laser. In this way, an assembling process is simplified, the glue and the screws are omitted from the assembling process, and therefore, the assembling process is simple, efficient, and has low cost. An overall cost of the assembling process in the present disclosure is lower than an overall cost of assembling metal structures traditionally. In addition, cost of assembling the lens assembly is significantly reduced.
2. Since no screws and glue are used and the soldering process is performed, the motherboard assembly and the front shell are configured as the one-piece structure. In this way, the technical problem of the camera being loosened and shifted, caused by being used in the environment of high temperatures and high humidity, may be solved.
3. The one-piece lens barrel is formed by the forging process, and the front shell and the bottom shell are soldered with each other by the laser. Therefore, the front shell and the bottom shell are configured as a one-piece and integral structure, such that the front shell has high precision, and the problem of fogs being formed on the lens, caused by the seal ring and the glue in the traditional assembling process being aged, may be solved.

### BRIEF DESCRIPTION OF THE DRAWINGS

FIG. 1 is a structural schematic view of a one-piece lens barrel having high sealing performance according to an embodiment of the present disclosure.
FIG. 2 is an explosive view of the one-piece lens barrel having high sealing performance according to an embodiment of the present disclosure.
FIG. 3 is a bottom view of the one-piece lens barrel having high sealing performance according to an embodiment of the present disclosure.

Reference numerals in the drawings: 1, front shell; 2, bottom shell; 3, positioning post; 4, motherboard assembly; 5, positioning hole.

### DETAILED DESCRIPTION

The present disclosure will be illustrated in more details by referring to the accompanying drawings.

### Embodiments

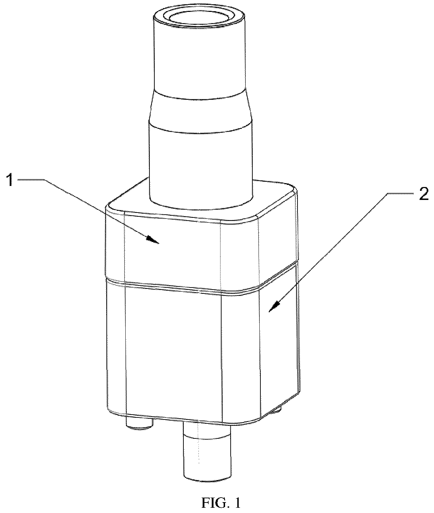

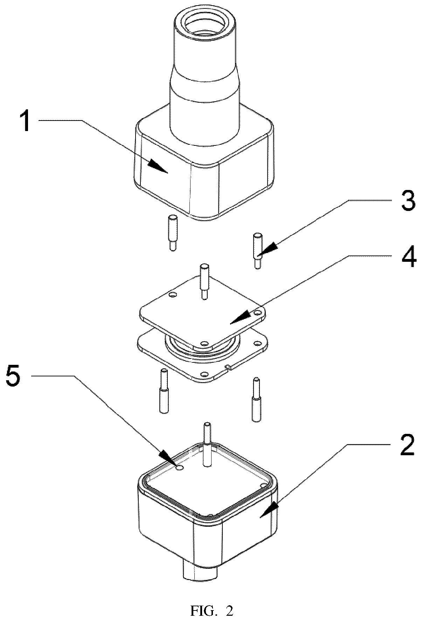

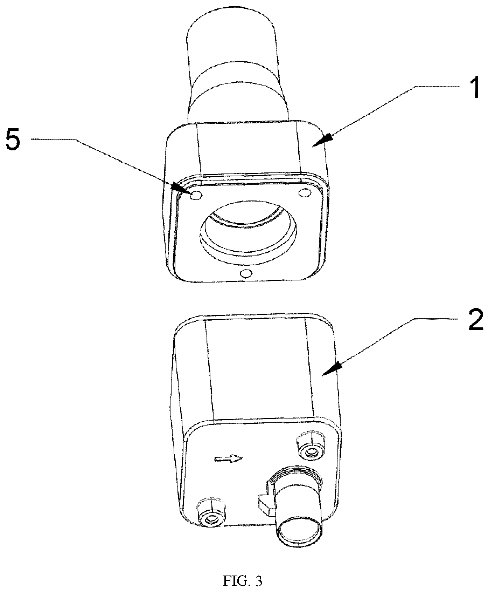

As shown in FIG. 1 to FIG. 3, a one-piece lens barrel having high sealing performance includes a front shell 1 and a bottom shell 2. The bottom shell 2 is arranged at a middle of a bottom end of the front shell 1. Each of the front shell 1 and the bottom shell 2 is a one-piece and integral structure. The front shell 1 and the bottom shell 2 are fixedly connected to each other by taking laser to perform a soldering process. A depth of fusion bonding generated by the soldering process is 0.5-0.7mm, such that sealing performance of the lens barrel after the soldering process may be improved. The laser soldering may be performed by a device available in the art. In the soldering process, energy may be concentrated at a location, which is irradiated by the laser. In the soldering process, a laser device may continuously irradiate the laser for about 5 seconds. Further, a water cooling system device may be applied to reduce a temperature of the irradiated location rapidly to reach a roomtemperature range, such that various components of the entire assembly are not affected.

In detail, the front shell 1 (may be made of AL6061) and the rear shell 2 (may be made of AL1050/AL1070) of the one-piece lens barrel are laser-soldered with each other after performing a cold forging process, placing on a NC lathe, performing a CNC, performing a sandblasting process, applying an anode layer, breaking the anode layer by performing CNC at a soldering position, and compression-riveting a positioning pin. In this way, an effect of "two omissions and four preventions" is achieved. That is, two structures (the glue and the screws are omitted) are omitted form the assembly to increase an assembling efficiency. The motherboard and the shell are configured into the one-piece structure, such that the camera, while being used in the environment of high temperatures and high humidity and being vibrated, may be stable. The lens barrel may be configured as the one-piece structure by the forging process. Therefore, the lens barrel may have a high precision. No glue is required in the assembling process, and therefore, the problem of fogs being formed on the lens, caused by the glue being aged, may be solved. In this way, the lens assembly may be permanently acid-proof, water-proof, fog-proof, and dust-proof.

A motherboard assembly 4 is disposed at a middle of an inner cavity defined in the front shell 1 and the bottom shell 2. At least three sets of po sitioning posts 3 are connected to edges of a periphery of the motherboard assembly 4. The at least three sets of positioning posts 3 are distributed evenly. For example, the at least three sets of positioning posts 3 may be distributed into a triangle. Due to the positioning posts 3, an operator may mount and positioned the motherboard assembly 4 quickly. Therefore, the assembling efficiency may be increased. Further, the soldering process is performed to connect and fix the motherboard assembly 4 to the shell. In this way, the motherboard module 4 may be mounted fixedly and stably, preventing the motherboard module 4 from falling off when being vibrated. Compared to the traditional fixation by the glue, an optical axis of the lens in the present disclosure and an optical axis of a chip on the motherboard assembly may not be displaced, while the lens barrel is being used in a bad situation of ultra-high or ultra-low temperatures.

For the front shell 1, the AL6061 material is used, and the cold forging process is performed. Further, the front shell 1 is a one-piece structure. Positioning holes are defined in the front shell 1 in advance. Therefore, 3 positioning posts may be compression-riveted accurately. In this way, the elements, such as the motherboard assembly, may be quickly assembled by performing only a simple soldering process, and complex processes, such as a dispensing process, a baking process, and a curing process, are omitted. The assembling efficiency and yield are improved, such that breakthrough in reducing the manufacturing cost may be achieved. In some embodiments, material of the positioning post 3 may be brass, and a surface of the brass may be electroplated with tin, and therefore, hardness and other properties of the positioning post 3 may be improved.

Each of the bottom end of the front shell 1 and a top end of the bottom shell 2 defines at least three positioning holes 5. More specifically, the number of the positioning holes is equal to the number of the positioning posts. The positioning posts 3 may be engaged with the positioning holes 5 correspondingly. A bottom of the positioning post 3 is slidably mounted in a middle of an interior of the positioning hole 5. The positioning post 3 is fixedly mounted to the front shell 1 and the bottom shell 2 by a compression-riveting process, such that the motherboard assembly 4 may be mounted stably.

A working principle of the present disclosure is as follows.

The forging process is performed to configure the front shell 1 and bottom shell 2 into the one-piece structure. Further, the front shell 1 and the bottom shell 2 are soldered and sealed with each other by the laser. The assembling process is simplified, and an assembling process without the glue and the screws are achieved. In addition, by arranging three sets of positioning posts 3 on each of the bottom of the front shell 1 and the top of the bottom shell 2, the operator may mount and position the motherboard assembly 4 rapidly, improving the assembling efficiency. The motherboard assembly 4 is further connected and fixed to the shell by the soldering process. Therefore, stability of the motherboard assembly 4 is improved. Based on the above, the process of assembling the front shell 1 and the bottom shell 2 is simplified. Compared to the traditional assembling process, the lens barrel in the present disclosure has decreased assembling cost and improved the assembling efficiency.

## Claims

1. A one-piece lens barrel having high sealing performance, comprising: a front shell (1) and a bottom shell (2) arranged at a middle of a bottom end of the front shell (1);
wherein each of the front shell (1) and the bottom shell (2) is a one-piece and integral structure; and the front shell (1) and bottom shell (2) are fixedly connected to each other by laser soldering;
wherein the one-piece lens barrel is **characterized in that**, a motherboard assembly (4) is disposed at a middle of an inner cavity defined by the front shell (1) and the bottom shell (2); at least three sets of positioning posts (3) are connected to edges of a periphery of the motherboard assembly (4); each of the bottom end of the front shell (1) and the top of the bottom shell (2) defines three sets of positioning holes (5), each of the three sets of positioning holes (5) is adapted with one of the at least three sets of positioning posts (3); and the motherboard assembly (4) and the front shell (1) are configured as the one-piece structure, a bottom of each positioning post (3) of the at least three sets of positioning posts (3) is slidably mounted in a middle of an interior of a respective one of the three sets of positioning holes (5).

2. The one-piece lens barrel having high sealing performance according to claim 1, wherein the at least three sets of positioning posts (3) are uniformly distributed.

3. The one-piece lens barrel having high sealing performance according to claim 2, wherein the at least three sets of positioning posts (3) are fixedly mounted to the front shell (1) and the bottom shell (2) by a compression-riveting process.

4. The one-piece lens barrel having high sealing performance according to claim 2, wherein each of the at least three sets of positioning posts (3) is made of brass, and a surface of each of the at least three sets of positioning posts (3) is electroplated with tin.

5. The one-piece lens barrel having high sealing performance according to claim 1, wherein a depth of fusion bonding of the soldering is 0.5mm-0.7mm.

6. A one-piece lens barrel, comprising: a front shell (1) and a bottom shell (2) arranged at a middle of a bottom end of the front shell (1);
wherein each of the front shell (1) and the bottom shell (2) is a one-piece and integral structure; the front shell (1) and bottom shell (2) are fixedly and undetachably connected to each other; and the bottom end of the front shell (1) is fusion-bonded with a top of the bottom shell (2);
wherein the one-piece lens barrel is **characterized in that**, a motherboard assembly (4) is disposed at a middle of an inner cavity defined by the front shell (1) and the bottom shell (2); at least three sets of positioning posts (3) are connected to edges of a periphery of the motherboard assembly (4); each of the bottom end of the front shell (1) and the top of the bottom shell (2) defines three sets of positioning holes (5), each of the three sets of positioning holes (5) is adapted with one of the at least three sets of positioning posts (3); and the motherboard assembly (4) and the front shell (1) are configured as the one-piece structure; a bottom of each positioning post (3) of the at least three sets of positioning posts (3) is slidably mounted in a middle of an interior of a respective one of the three sets of positioning holes (5).

7. The one-piece lens barrel according to claim 6, wherein the at least three sets of positioning posts (3) are uniformly distributed.

8. The one-piece lens barrel according to claim 7, wherein the at least three sets of positioning posts (3) are compression-riveted to the front shell (1) and the bottom shell (2).

9. The one-piece lens barrel according to claim 7, wherein each of the at least three sets of positioning posts (3) is made of brass, and a surface of each of the at least three sets of positioning posts (3) is electroplated with tin.

10. The one-piece lens barrel according to claim 6, wherein a depth of fusion bonding between the bottom shell (2) and the front shell (1) is 0.5mm-0.7mm.

## Patentansprüche

1. Ein einteiliges Objektivgehäuse mit hoher Dichtungsleistung, umfassend: ein vorderes Gehäuse (1) und ein unteres Gehäuse (2), das in der Mitte eines unteren Endes des vorderen Gehäuses (1) angeordnet ist;
wobei sowohl das vordere Gehäuse (1) als auch das untere Gehäuse (2) eine einteilige und integrale Struktur aufweisen; und das vordere Gehäuse (1) und das untere Gehäuse (2) durch Laserschweißen fest miteinander verbunden sind;
wobei das einteilige Objektivgehäuse **dadurch gekennzeichnet ist, dass** eine Motherboard-Baugruppe (4) in der Mitte eines inneren Hohlraums angeordnet ist, der durch das vordere Gehäuse (1) und das untere Gehäuse (2) definiert wird; mindestens drei Sätze von Positionierungsstiften (3) mit Rändern eines Umfangs der Motherboard-Baugruppe (4) verbunden sind; sowohl das untere Ende des vorderen Gehäuses (1) als auch die Oberseite des unteren Gehäuses (2) drei Sätze von Positionierungslöchern (5) definieren, wobei jeder der drei Sätze von Positionierungslöchern (5) an einen der mindestens drei Sätze von Positionierungsstiften (3) angepasst ist; und die Motherboard-Baugruppe (4) und das vordere Gehäuse (1) als die einteilige Struktur konfiguriert sind, wobei ein Boden jedes Positionierungsstiftes (3) der mindestens drei Sätze von Positionierungsstiften (3) gleitend in einer Mitte eines Inneren eines jeweiligen der drei Sätze von Positionierungslöchern (5) montiert ist.

2. Das einteilige Objektivgehäuse mit hoher Dichtungsleistung nach Anspruch 1, wobei die mindestens drei Sätze von Positionierungsstiften (3) gleichmäßig verteilt sind.

3. Das einteilige Objektivgehäuse mit hoher Dichtungsleistung nach Anspruch 2, wobei die mindestens drei Sätze von Positionierungsstiften (3) durch ein Pressnietverfahren fest an dem vorderen Gehäuse (1) und dem unteren Gehäuse (2) montiert sind.

4. Das einteilige Objektivgehäuse mit hoher Dichtungsleistung nach Anspruch 2, wobei jeder der mindestens drei Sätze von Positionierungsstiften (3) aus Messing gefertigt ist und eine Oberfläche jedes der mindestens drei Sätze von Positionierungsstiften (3) mit Zinn galvanisiert ist.

5. Das einteilige Objektivgehäuse mit hoher Dichtungsleistung nach Anspruch 1, wobei eine Schmelzverbindungstiefe des Schweißens 0.5 mm - 0.7 mm beträgt.

6. Ein einteiliges Objektivgehäuse, umfassend: ein vorderes Gehäuse (1) und ein unteres Gehäuse (2), das in der Mitte eines unteren Endes des vorderen Gehäuses (1) angeordnet ist;
wobei sowohl das vordere Gehäuse (1) als auch das untere Gehäuse (2) eine einteilige und integrale Struktur aufweisen; das vordere Gehäuse (1) und das untere Gehäuse (2) fest und unlösbar miteinander verbunden sind; und das untere Ende des vorderen Gehäuses (1) mit einer Oberseite des unteren Gehäuses (2) schmelzverbunden ist;
wobei das einteilige Objektivgehäuse **dadurch gekennzeichnet ist, dass** eine Motherboard-Baugruppe (4) in der Mitte eines inneren Hohlraums angeordnet ist, der durch das vordere Gehäuse (1) und das untere Gehäuse (2) definiert wird; mindestens drei Sätze von Positionierungsstiften (3) mit Rändern eines Umfangs der Motherboard-Baugruppe (4) verbunden sind; sowohl das untere Ende des vorderen Gehäuses (1) als auch die Oberseite des unteren Gehäuses (2) drei Sätze von Positionierungslöchern (5) definieren, wobei jeder der drei Sätze von Positionierungslöchern (5) an einen der mindestens drei Sätze von Positionierungsstiften (3) angepasst ist; und die Motherboard-Baugruppe (4) und das vordere Gehäuse (1) als die einteilige Struktur konfiguriert sind; wobei ein Boden jedes Positionierungsstiftes (3) der mindestens drei Sätze von Positionierungsstiften (3) gleitend in einer Mitte eines Inneren eines jeweiligen der drei Sätze von Positionierungslöchern (5) montiert ist.

7. Das einteilige Objektivgehäuse nach Anspruch 6, wobei die mindestens drei Sätze von Positionierungsstiften (3) gleichmäßig verteilt sind.

8. Das einteilige Objektivgehäuse nach Anspruch 7, wobei die mindestens drei Sätze von Positionierungsstiften (3) an das vordere Gehäuse (1) und das untere Gehäuse (2) pressgenietet sind.

9. Das einteilige Objektivgehäuse nach Anspruch 7, wobei jeder der mindestens drei Sätze von Positionierungsstiften (3) aus Messing gefertigt ist und eine Oberfläche jedes der mindestens drei Sätze von Positionierungsstiften (3) mit Zinn galvanisiert ist.

10. Das einteilige Objektivgehäuse nach Anspruch 6, wobei eine Schmelzverbindungstiefe zwischen dem unteren Gehäuse (2) und dem vorderen Gehäuse (1) 0.5 mm - 0.7 mm beträgt.

## Revendications

1. Un barillet d'objectif monobloc à haute performance d'étanchéité, comprenant: une coque avant (1) et une coque inférieure (2) disposée au milieu d'une extrémité inférieure de la coque avant (1);
dans lequel chacune de la coque avant (1) et de la coque inférieure (2) est une structure monobloc et intégrale; et la coque avant (1) et la coque inférieure (2) sont reliées de manière fixe l'une à l'autre par brasage laser;
dans lequel le barillet d'objectif monobloc est **caractérisé en ce qu'**un ensemble de carte mère (4) est disposé au milieu d'une cavité interne définie par la coque avant (1) et la coque inférieure (2); au moins trois ensembles de colonnettes de positionnement (3) sont reliés aux bords d'une périphérie de l'ensemble de carte mère (4); chacune de l'extrémité inférieure de la coque avant (1) et de la partie supérieure de la coque inférieure (2) définit trois ensembles de trous de positionnement (5), chacun des trois ensembles de trous de positionnement (5) étant adapté à l'un des au moins trois ensembles de colonnettes de positionnement (3); et l'ensemble de carte mère (4) et la coque avant (1) sont configurés comme la structure monobloc, une partie inférieure de chaque colonnette de positionnement (3) des au moins trois ensembles de colonnettes de positionnement (3) est montée de manière coulissante au milieu d'un intérieur de l'un respectif des trois ensembles de trous de positionnement (5).

2. Le barillet d'objectif monobloc à haute performance d'étanchéité selon la revendication 1, dans lequel les au moins trois ensembles de colonnettes de positionnement (3) sont répartis uniformément.

3. Le barillet d'objectif monobloc à haute performance d'étanchéité selon la revendication 2, dans lequel les au moins trois ensembles de colonnettes de positionnement (3) sont montés de manière fixe sur la coque avant (1) et la coque inférieure (2) par un processus de rivetage par compression.

4. Le barillet d'objectif monobloc à haute performance d'étanchéité selon la revendication 2, dans lequel chacun des au moins trois ensembles de colonnettes de positionnement (3) est réalisé en laiton, et une surface de chacun des au moins trois ensembles de colonnettes de positionnement (3) est revêtue d'étain par galvanoplastie.

5. Le barillet d'objectif monobloc à haute performance d'étanchéité selon la revendication 1, dans lequel une profondeur de liaison par fusion du brasage est de 0.5 mm à 0.7 mm.

6. Un barillet d'objectif monobloc, comprenant: une coque avant (1) et une coque inférieure (2) disposée au milieu d'une extrémité inférieure de la coque avant (1);
dans lequel chacune de la coque avant (1) et de la coque inférieure (2) est une structure monobloc et intégrale; la coque avant (1) et la coque inférieure (2) sont reliées l'une à l'autre de manière fixe et indémontable; et l'extrémité inférieure de la coque avant (1) est liée par fusion avec une partie supérieure de la coque inférieure (2);
dans lequel le barillet d'objectif monobloc est **caractérisé en ce qu'**un ensemble de carte mère (4) est disposé au milieu d'une cavité interne définie par la coque avant (1) et la coque inférieure (2); au moins trois ensembles de colonnettes de positionnement (3) sont reliés aux bords d'une périphérie de l'ensemble de carte mère (4); chacune de l'extrémité inférieure de la coque avant (1) et de la partie supérieure de la coque inférieure (2) définit trois ensembles de trous de positionnement (5), chacun des trois ensembles de trous de positionnement (5) étant adapté à l'un des au moins trois ensembles de colonnettes de positionnement (3); et l'ensemble de carte mère (4) et la coque avant (1) sont configurés comme la structure monobloc; une partie inférieure de chaque colonnette de positionnement (3) des au moins trois ensembles de colonnettes de positionnement (3) est montée de manière coulissante au milieu d'un intérieur de l'un respectif des trois ensembles de trous de positionnement (5).

7. Le barillet d'objectif monobloc selon la revendication 6, dans lequel les au moins trois ensembles de colonnettes de positionnement (3) sont répartis uniformément.

8. Le barillet d'objectif monobloc selon la revendication 7, dans lequel les au moins trois ensembles de colonnettes de positionnement (3) sont rivetés par compression à la coque avant (1) et à la coque inférieure (2).

9. Le barillet d'objectif monobloc selon la revendication 7, dans lequel chacun des au moins trois ensembles de colonnettes de positionnement (3) est réalisé en laiton, et une surface de chacun des au moins trois ensembles de colonnettes de positionnement (3) est revêtue d'étain par galvanoplastie.

10. Le barillet d'objectif monobloc selon la revendication 6, dans lequel une profondeur de liaison par fusion entre la coque inférieure (2) et la coque avant (1) est de 0.5 mm à 0.7 mm.
